# EUROPEAN PATENT SPECIFICATION

(11) **EP 3 812 251 B1**
(45) Date of publication and mention of the grant of the patent: **01.04.2026**
(21) Application number: 19822038.6
(22) Date of filing: 15.02.2019
(51) Int. Cl.: B62D 63/02, B60G 11/14, B60B 33/04, B60B 19/12, B60B 33/06, B62D 61/04, B60G 3/14, B60B 35/04

(54) **AGV CHASSIS MECHANISM AND AGV PROVIDED WITH SAME**
AGV-CHASSISMECHANISMUS UND DAMIT VERSEHENES AGV
MÉCANISME DE CHÂSSIS AGV ET AGV ÉQUIPÉ DE CELUI-CI

(30) Priority: 19.06.2018 CN 201820944295 U
(43) Date of publication of application: 28.04.2021
(73) Proprietor: Beijing Jingdong Qianshi Technology Co., Ltd., Beijing 100176 (CN)
(72) Inventor: SHAN, Wenjun, Beijing 100086 (CN); QIAO, Longlong, Beijing 100086 (CN)
(74) Representative: Vossius & Partner Patentanwälte Rechtsanwälte mbB
(86) International application number: PCT/CN2019/075273
(87) International publication number: WO 2019/242315

(56) References cited:
- CN-A- 103 625 863
- CN-A- 104 163 217
- CN-A- 104 875 575
- CN-A- 105 774 457
- CN-A- 106 427 444
- CN-A- 107 599 770
- CN-A- 107 914 532
- CN-U- 207 060 209
- CN-U- 207 060 209
- CN-U- 208 344 384
- DE-C1- 3 839 433

## Description

### CROSS-REFERENCE TO RELATED APPLICATIONS

The present disclosure claims priority to Chinese Patent Application No. 201820944295.1 filed on June 19, 2018.

### TECHNICAL FIELD

The present disclosure relates to the technical field of travelling vehicles, and in particular, to an AGV chassis mechanism and an AGV with the mechanism.

### BACKGROUND

In the field of modern logistics having sorting, distribution and transportation, a conveying mechanism such as AGV (automated guided vehicle) is widely used. A chassis mechanism of a conventional AGV mainly includes a chassis and a travelling mechanism installed on the chassis. When a dual differential motion scheme is adopted in the design of the conventional AGV, it is often necessary to adjust springs of respective wheel assemblies to adjust parameters such as a positive pressure of a driving wheel, a horizontal state of a vehicle body, and a ground adaptability. Therefore, the springs with various specifications are needed, the operations are complicated and the efficiency is low.
CN106427444A and CN207060209U are related prior art documents.

### SUMMARY

The invention is set out in the appended set of claims.

A technical problem to be solved by the present disclosure is how to provide an AGV chassis mechanism that reduces replacement of springs of wheel assemblies when adjusting parameters such as a positive pressure of a driving wheel, a horizontal state of a vehicle body, and a ground adaptability.

Another technical problem to be solved by the present disclosure is how to provide an AGV with the aforementioned AGV chassis mechanism.

The additional aspects and advantages of the present disclosure will be partly set forth in the following description, and partly will become apparent from the description, or may be learned through the practice of the present disclosure.

In order to achieve the above objectives, the present disclosure adopts the following technical solutions.

According to an aspect of the present disclosure, an AGV chassis mechanism is provided. The AGV chassis mechanism includes a chassis and a travelling mechanism that includes two driving wheel assemblies respectively arranged at left and right sides of the chassis and two universal wheel assemblies respectively arranged at front and rear ends of the chassis. The driving wheel assembly includes a first hinge base, a second hinge base, a swing arm, a swing rod and a driving wheel. The first hinge base and the second hinge base are fixed to the chassis and spaced from each other. The swing arm has a first end hinged to the first hinge base and a second end extending toward the second hinge base. The swing rod has an upper end and a lower end that is hinged to the second hinge base, the second end of the swing arm is sleeved on the swing rod, the upper end of the swing rod is screwed with a first adjusting nut, and a first elastic member is arranged between the first adjusting nut and the swing arm. The driving wheel is installed on the swing arm. Two said driving wheel assemblies are symmetrically arranged on the left and right sides of the chassis.

According to the invention, the first end of the swing arm is hinged to the first hinge base through a first hinge shaft, and the first hinge shaft thereon is provided with a first bush for limiting position of the swing arm in an extension direction of the first hinge shaft and the swing arm is swingable around the first hinge shaft, and a swinging direction of the swing arm is limited by sliding of the second end of the swing arm.

According to an embodiment of the present disclosure, the first bush is an oil-free bush.

According to an embodiment of the present disclosure, a width of the second end of the swing arm is greater than a width of a top of the second hinge base, so that position of downward swing of the swing arm is limited by the second hinge base.

According to an embodiment of the present disclosure, a first gasket is arranged at a bottom of the second end of the swing arm.

According to an embodiment of the present disclosure, material of the first gasket is nylon.

According to an embodiment of the present disclosure, a second gasket is arranged between a top of the second end of the swing arm and the first elastic member.

According to an embodiment of the present disclosure, material of the second gasket is nylon.

According to an embodiment of the present disclosure, the lower end of the swing rod is hinged to the second hinge base through a second hinge shaft, and the second hinge shaft thereon is provided with a second bush for limiting position of the swing rod in an extension direction of the second hinge shaft.

According to an embodiment of the present disclosure, the second bush is an oil-free bush.

According to an embodiment of the present disclosure, the upper end of the swing rod is screwed with a first locking nut, and the first locking nut is adjacently arranged at a side of the first adjusting nut towards the upper end of the swing rod.

According to an embodiment of the present disclosure, the first elastic member is a spring.

According to an embodiment of the present disclosure, the universal wheel assembly includes a mounting base, a mounting rod, and a universal wheel. The mounting base is fixed to the chassis. The mounting rod is vertically inserted through the mounting base and has an upper end and a lower end. The universal wheel is installed at the lower end of the mounting rod. The upper end of the mounting rod is screwed with a second adjusting nut, a middle part of the mounting rod is sleeved with an adjusting screw having an upper end adjacent to the second adjusting nut, a second elastic member is arranged between a lower end of the adjusting screw and the universal wheel, and a third adjusting nut fitting the adjusting screw is arranged at a top of the mounting base.

According to an embodiment of the present disclosure, the chassis is provided with a wheel hole, the mounting base is fixed to the chassis and closes the wheel hole, and the universal wheel protrudes downward from the chassis through the wheel hole.

According to an embodiment of the present disclosure, the mounting base has a cylindrical structure with a top cover, and the third adjusting nut is arranged on the top cover.

According to an embodiment of the present disclosure, a third gasket is arranged between the second adjusting nut and the adjusting screw.

According to an embodiment of the present disclosure, material of the third gasket is nylon.

According to an embodiment of the present disclosure, the upper end of the mounting rod is screwed with a second locking nut, and the second locking nut is adjacently arranged at a side of the second adjusting nut towards the upper end of the mounting rod.

According to an embodiment of the present disclosure, a third bush is arranged between the mounting rod and the adjusting screw in a sleeving manner for limiting position of the adjusting screw in an extension direction of the mounting rod.

According to an embodiment of the present disclosure, the third bush is an oil-free bush.

According to an embodiment of the present disclosure, the second elastic member is a spring.

According to another aspect of the present disclosure, an AGV is provided. The AGV includes a chassis mechanism and a loading mechanism installed on the chassis mechanism. The chassis mechanism is the AGV chassis mechanism described in the above embodiments and provided by the present disclosure.

It can be seen from the above technical solutions that the present disclosure has the following beneficial effects.

The AGV chassis mechanism and the AGV with the mechanism provided by the present disclosure adopt a structure design of that the first end of the swing arm is hinged to the first hinge base, the second end of the swing arm extends toward the second hinge base, the lower end of the swing rod is hinged to the second hinge base, the second end of the swing arm is sleeved on the swing rod, the upper end of the swing rod is screwed with the first adjusting nut, and the first elastic member is arranged between the first adjusting nut and the swing arm, so that when the travelling mechanism of the AGV chassis mechanism adopts a dual differential design scheme in which two driving wheel assemblies are arranged at the left and right sides of the chassis and two universal wheel assemblies are arranged at the front and rear ends of the chassis, parameters such as a positive pressure of the driving wheel, a horizontal state of a vehicle body, and a ground adaptability can be adjusted without replacing the elastic members of the respective driving wheel assemblies, which simplifies adjustment operations and improves adjustment efficiency.

Further in an embodiment of the present disclosure, with the structure design of that the mounting rod is vertically inserted through the mounting base, the upper end of the mounting rod is screwed with the second adjusting nut, the middle part of the mounting rod is sleeved with the adjusting screw, the upper end of the adjusting screw is arranged adjacent to the second adjusting nut, the second elastic member is arranged between the lower end of the adjusting screw and the universal wheel, and the third adjusting nut fitting the adjusting screw is arranged at the top of the mounting base, so that when the travelling mechanism of the AGV chassis mechanism adopts the dual differential design scheme in which two driving wheel assemblies are arranged at the left and right sides of the chassis and two universal wheel assemblies are arranged at the front and rear ends of the chassis, parameters such as a positive pressure of the driving wheel and the universal wheel, a horizontal state of a vehicle body, and a ground adaptability can be adjusted without replacing the elastic members of the respective driving wheel assemblies and the respective universal wheel assemblies, which further simplifies adjustment operations and improves adjustment efficiency.

### BRIEF DESCRIPTION OF THE DRAWINGS

FIG 1 is a schematic structural diagram showing an AGV chassis mechanism according to an exemplary embodiment;
FIG 2 is a schematic structural view of the AGV chassis mechanism shown in FIG 1 from another view angle;
FIG 3 is a schematic structural diagram of a driving wheel assembly of the AGV chassis mechanism shown in FIG 1;
FIG 4 is a front view of the driving wheel assembly shown in FIG 3;
FIG 5 is a cross-sectional view taken along line A-A in FIG 4;
FIG 6 is a schematic structural diagram of a universal wheel assembly of the AGV chassis mechanism shown in FIG 1; and
FIG 7 is a partial cross-sectional view of the universal wheel assembly shown in FIG 6.

Illustrations of reference numerals:
100. Driving wheel assembly;
110. First hinge base;
120. Second hinge base;
130. Swing arm;
131. First hinge shaft;
132. First bush;
133. First gasket;
134. Second gasket;
140. Swing rod;
141. First adjusting nut;
142. First elastic member;
143. Second hinge shaft;
144. Second bush;
145. First locking nut;
150. Driving wheel;
200. Universal wheel assembly;
210. Mounting base;
220. Mounting rod;
221. Second adjusting nut;
222. Adjusting screw;
223. Third adjusting nut;
224. Second elastic member;
225. Third gasket;
226. Second locking nut;
227. Third bush;
230. Universal wheel; and
300. Chassis.

### DETAILED DESCRIPTION

The same reference numerals in the figures represent the same or similar structures, and thus their detailed descriptions will be omitted. Example embodiments will now be described more fully with reference to the accompanying drawings. However, the example embodiments may be implemented in various forms, and should not be construed as being limited to the embodiments set forth herein; on the contrary, these embodiments are provided so that the present disclosure will be comprehensive and complete, and the concept of the example embodiments is fully conveyed to those skilled in the art.

### AGV chassis mechanism embodiment

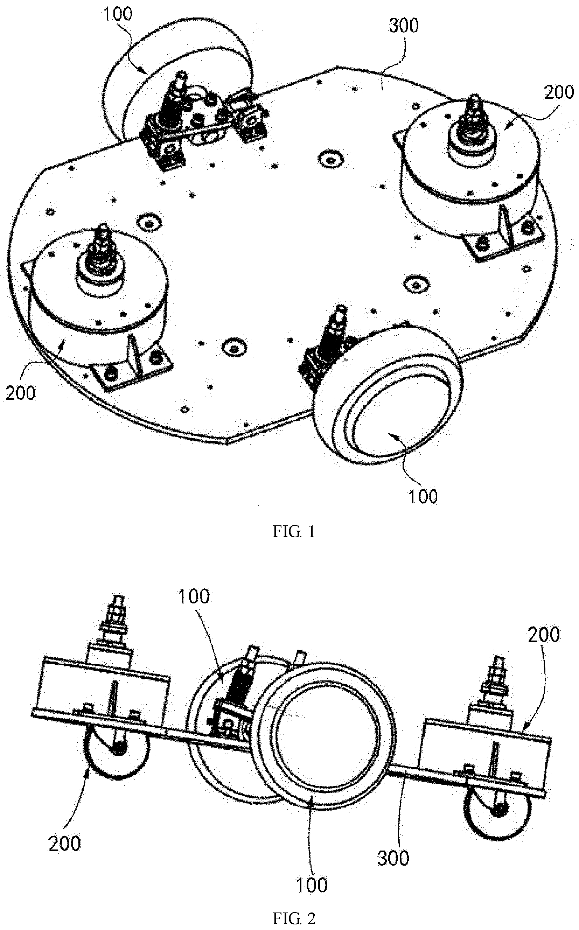

With reference to FIG 1, FIG 1 representatively shows a schematic structural diagram of an AGV chassis mechanism that can show the principle of the present disclosure. In the exemplary embodiment, the AGV chassis mechanism provided the present disclosure is illustrated as example by being applied to an AGV, specifically, an AGV adopting a dual differential motion design scheme. It can be easily understood by those skilled in the art that various modifications, additions, substitutions, deletions or other changes, that are made to the following specific embodiments in order to apply the AGV chassis mechanism to other types of AGVs or other types of travelling apparatuses, are all within the principle scope of the AGV chassis mechanism provided by the present disclosure.

As shown in FIGS. 1 and2, in the embodiment, the AGV chassis mechanism provided by the present disclosure mainly includes a chassis 300 and a travelling mechanism adopting a dual differential motion design scheme. The traveling mechanism mainly includes two driving wheel assemblies 100 and two universal wheel assemblies 200. The two driving wheel assemblies 100 are installed on left and right sides of the chassis 300 respectively, and the two universal wheel assemblies 200 are installed on front and rear ends of the chassis 300 respectively.

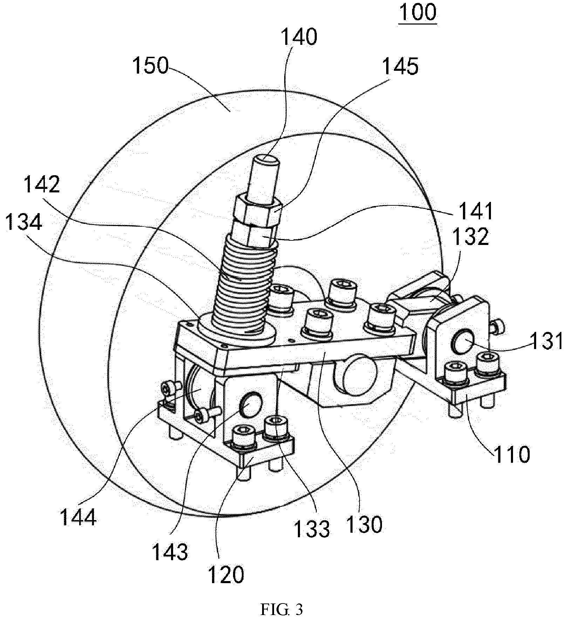

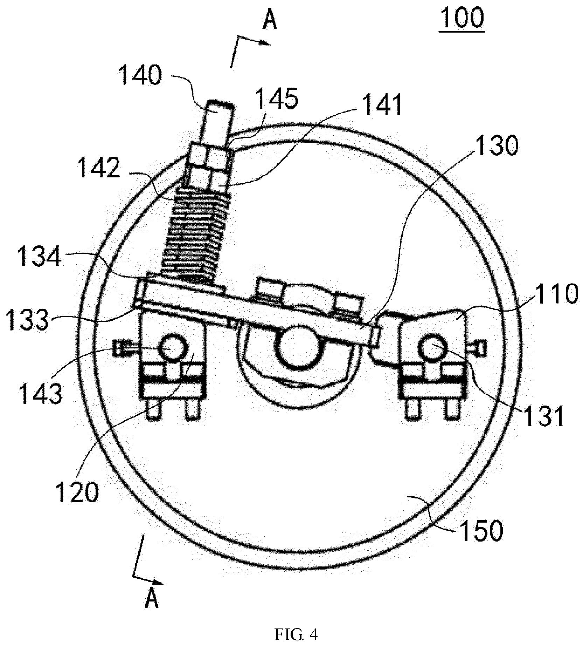

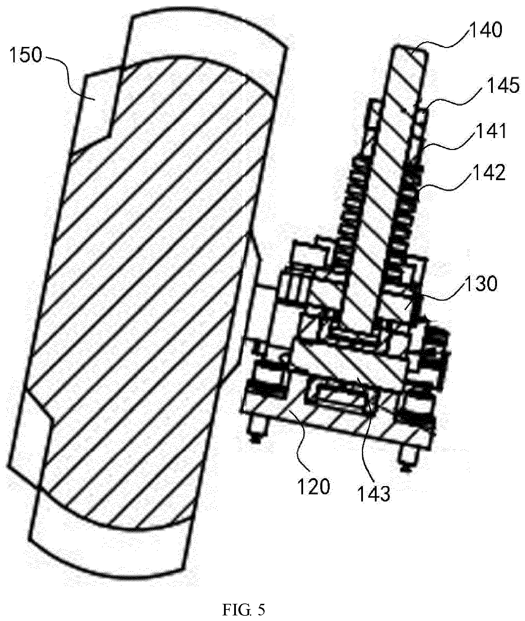

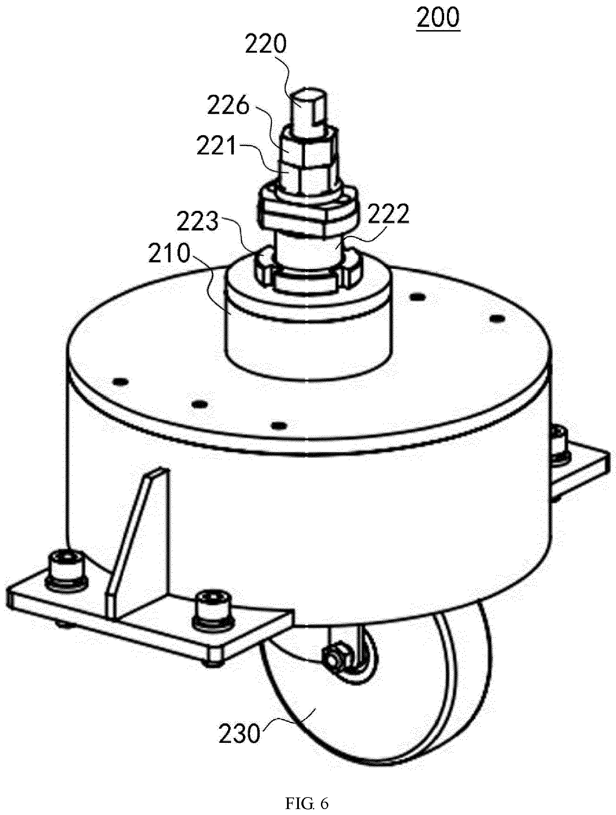

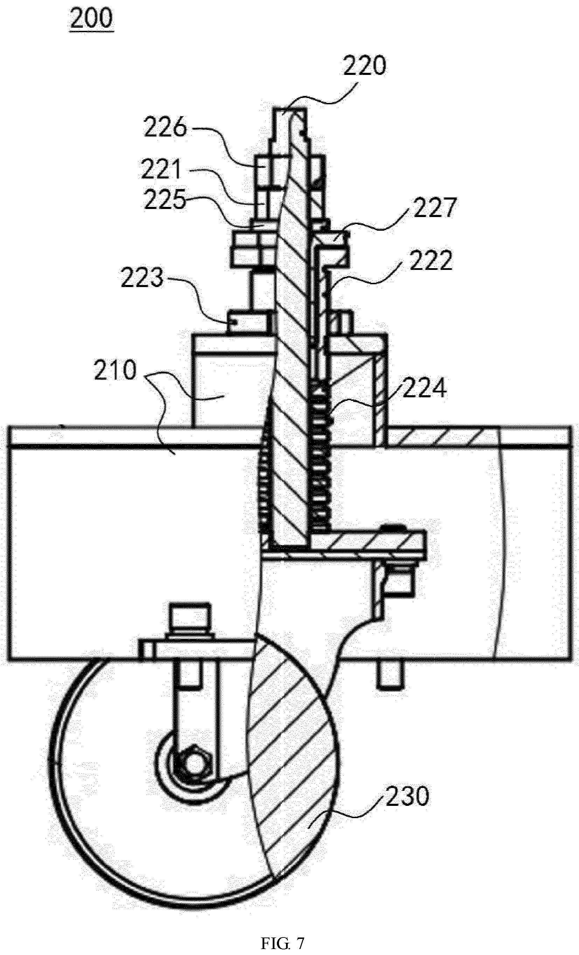

With reference to FIGS. 2 to 7, FIG 2 representatively shows, from another view angle, a schematic structural diagram of the AGV chassis mechanism that can show the principle of the present disclosure; FIG 3 representatively shows a schematic structural diagram of the driving wheel assembly 100 of the AGV chassis mechanism that can show the principle of the present disclosure; FIG 4 representatively shows a front view of the driving wheel assembly 100; FIG 5 representatively shows a cross-sectional view taken along line A-A in FIG 4; FIG 6 representatively shows a schematic structural diagram of the universal wheel assembly 200 of the AGV chassis mechanism that can show the principle of the present disclosure; FIG 7 representatively shows a partial cross-sectional view of the universal wheel assembly 200. The structure, connection manner and functional relationship of the main components of the AGV chassis mechanism provided by the present disclosure will be described in detail below in conjunction with the above-mentioned drawings.

As shown in FIGS. 1 to 5, in the embodiment, two driving wheel assemblies 100 are installed symmetrically on the left and right sides of the chassis 300, and each of the driving wheel assemblies 100 mainly includes a first hinge base 110, a second hinge base 120, a swing arm 130, a swing rod 140 and a driving wheel 150. Specifically, the first hinge base 110 and the second hinge base 120 are fixed to the chassis 300 and spaced from each other. The swing arm 130 has a first end and a second end and is used for mounting the driving wheel 150. The first end is hinged to the first hinge base 110, and the second end extends toward the second hinge base 120. The swing rod 140 has an upper end and a lower end. The lower end is hinged to the first hinge base 110. The second end of the swing arm 130 is sleeved on the swing rod 140. The upper end of the swing rod 140 is screwed with a first adjusting nut 141. A first elastic member 142 is arranged between the first adjusting nut 141 and the swing arm 130. In the above-mentioned structural design, when the driving wheel 150 floats due to uneven ground, the driving wheel 150 can drive the swing arm 130 to swing around the first hinge base 110, and a swinging direction of the swing arm 130 is limited by the sliding of the second end of the swing arm 130 along an extension direction of the swing rod 140. During the swinging of the swing arm 130, the first elastic member 142 can provide functions of floating buffer and upper position limit. Adjustment of parameters such as a positive pressure of the driving wheel 150, a horizontal state of a vehicle body, and a ground adaptability may be achieved by rotating the first adjusting nut 141 to be moved along the swing rod 140 to adjust a pre-tightening force of the first elastic member 142. Compared with the conventional solution by adjusting the spring of the driving wheel assembly 100 to achieve the above-mentioned adjustment, the above-mentioned design of the present disclosure can adjust the parameters such as the positive pressure of the driving wheel 150, the horizontal state of the vehicle body, and the ground adaptability without replacing the elastic members, which simplifies adjustment operations and improves adjustment efficiency.

Further, as shown in FIGS. 3 and 4, in the embodiment, the first end of the swing arm 130 is hinged to the first hinge base 110 through a first hinge shaft 131, and the first hinge shaft 131 thereon is provided with a first bush 132 for limiting position of the swing arm 130 in an extension direction of the first hinge shaft 131. **In** addition, the first bush132 may preferably be an oil-free bush.

Similarly, as shown in FIGS. 3 and 4, in the embodiment, the lower end of the swing rod 140 is hinged to the second hinge base 120 through a second hinge shaft 143, and a second bush 144 is provided on the second hinge shaft 143 for limiting position of the swing rod 140 in an extension direction of the second hinge shaft 143. **In** addition, the second bush 144 may also preferably be an oil-free bush.

Furthermore, as shown in FIGS. 3 and 4, in the embodiment, a width of the second end of the swing arm 130 is greater than a width of a top of the second hinge base 120. Through the above structural design, when the driving wheel 150 falls down and drives the swing arm 130 to swing down around the first hinge base 110, the second end of the swing arm 130 moves down along the swing rod 140 to the top of the second hinge base 120, and then can not move down anymore, so that position of downward swing of the swing arm 130 is limited by the second hinge base 120 (that is, lower position limit).

In addition, as shown in FIGS. 3 and 4, in the embodiment, the top of the second hinge base 120 preferably has a slope surface structure to be further adapted for the contact between the second end of the swing arm 130 and the top of the second hinge base 120.

Further, as shown in FIGS. 3 and 4, in the embodiment, the bottom of the second end of the swing arm 130 is provided with a first gasket 133. Actually, the swing arm 130 is contacted with the top of the first hinge base 110 through the first gasket 133, thereby reducing structure wear and extending the service life. Since the second end of the swing arm 130 is sleeved on the swing rod 140, the structure of the first gasket 133 is approximately a ring structure sleeved on the swing rod 140. In addition, the material of the first gasket 133 may preferably be nylon to reduce noise caused by collision and friction during floating.

Similarly, as shown in FIGS. 3 and 4, in the embodiment, a second gasket 134 is provided between the top of the second end of the swing arm 130 and the first elastic member 142. Actually, the swing arm 130 is contacted with the first elastic member 142 through the second gasket 134, thereby reducing structure wear and extending the service life. Since the second end of the swing arm 130 is sleeved on the swing rod 140, the structure of the second gasket 134 is approximately a ring structure sleeved on the swing rod 140. In addition, the material of the second gasket 134 may also be preferably nylon to reduce noise caused by collision and friction during floating.

Furthermore, as shown in FIGS. 3 to 5, in the embodiment, the upper end of the swing rod 140 is further screwed with a first locking nut 145. The first locking nut 145 is adjacently arranged at a side of the first adjusting nut 141 towards the upper end of the swing rod 140, to provide the first adjusting nut 141 with an anti-exiting function, thereby avoiding a pre-tightening failure of the first elastic member 142 due to loosening and thus exiting of the first adjusting nut 141 along the swing rod 140.

Further, as shown in FIGS. 3 to 5, in the embodiment, the first elastic member 142 is preferably a spring. In other embodiments, the first elastic member 142 may also be selected from an elastic sheet, a leaf spring and the like, however is not limited thereto.

As shown in FIGS. 1 and 2, 6 and 7, in the embodiment, each of the universal wheel assemblies 200 mainly includes a mounting base 210, a mounting rod 220 and a universal wheel 230. Specifically, the mounting base 210 is fixed on the chassis 300. The mounting rod 220 vertically inserts through the mounting base 210 and has an upper end and a lower end. The universal wheel 230 is installed at the lower end of the mounting rod 220. The upper end of the mounting rod 220 is screwed with a second adjusting nut 221, a middle part of the mounting rod 220 is sleeved with an adjusting screw 222 having an upper end adjacent to the second adjusting nut 221, a second elastic member 221 is arranged between a lower end of the adjusting screw 222 and the universal wheel 230, and a third adjusting nut 223 fitting the adjusting screw 222 is arranged at a top of the mounting base 210. In the above-mentioned structural design, when the universal wheel 230 floats due to uneven ground, the universal wheel 230 can drive the mounting rod 200 to float up and down with respect to the mounting base 210 (i.e., the chassis 300). During the upward and downward floating of the above mounting rod 220, the second elastic member 224 can provide functions of floating buffer and position limit. Adjustment of parameters such as a positive pressure of the universal wheel 230, a horizontal state of a vehicle body, and a ground adaptability may be achieved by rotating the second adjusting nut 221 to be moved along the mounting rod 220 to adjust a pre-tightening force of the second elastic member 224. Compared with the conventional solution by adjusting the spring of the universal wheel assembly 200 to achieve the above-mentioned adjustment, the above-mentioned design of the present disclosure can adjust the parameters such as the positive pressure of the universal wheel 230, the horizontal state of the vehicle body, and the ground adaptability without replacing the elastic members, which simplifies adjustment operations and improves adjustment efficiency.

In addition, when only the second adjusting nut 221 is adjusted, the mounting rod 220 moves up and down, and at the same time, the universal wheel 230 also moves up and down. If the universal wheel 230 is desired to be positioned in a vertical direction, the adjusting screw 222 may be adjusted to ensure that the universal wheel 230 does not move. Immovability of the universal wheel 230 and desired rigidity adjustment of the second elastic member 224 may be achieved by coordinately adjusting the second adjusting nut 221 and the adjusting screw 222.

Further, in the embodiment, the chassis 300 is opened with a wheel hole, the mounting base 210 is fixed on the chassis 300 and closes the wheel hole, and the universal wheel 230 protrudes downward from the chassis 300 through the wheel hole. Accordingly, the mounting base 210 may separate the inside of the vehicle body of the AGV from the wheel hole, thereby providing a dustproof effect and improving a dustproof ability of the vehicle body.

Further, as shown in FIGS. 6 and 7, in the embodiment, the mounting base 210 is preferably a cylindrical structure with a top cover, and the third adjusting nut 223 is arranged on the top cover. The cylindrical structure may be easily manufactured and may conveniently realize the above-mentioned closing and dustproof functions. In other embodiments, the mounting base 210 may also have other shapes and structures, which is not limited in the embodiment.

Further, as shown in FIGS. 6 and 7, in the embodiment, a third gasket 225 is arranged between the second adjusting nut 221 and the adjusting screw 222. Actually, the second adjusting nut 221 is contacted with the top of the adjusting screw 222 through the third gasket 225, thereby reducing structure wear and extending the service life. Since the adjusting screw 222 is sleeved on the swing rod 140, the structure of the third gasket 225 is approximately a ring structure sleeved on the mounting rod 220. In addition, the material of the third gasket 225 may preferably be nylon to reduce noise caused by collision and friction during floating.

Further, as shown in FIGS. 6 to 7, in the embodiment, the upper end of the mounting rod 220 is further screwed with a second locking nut 226. The second locking nut 226 is adjacently arranged at a side of the second adjusting nut 221 towards the upper end of the mounting rod 220, to provide the second adjusting nut 221 with an anti-exiting function, thereby avoiding a pre-tightening failure of the second elastic member 224 due to loosening and thus exiting of the second adjusting nut 221 along the mounting rod 220.

Further, as shown in FIG 7, in the embodiment, a third bush 227 is arranged between the mounting rod 220 and the adjusting screw 222 in a sleeving manner for limiting position of the adjusting screw 222 in an extension direction of the mounting rod 220. In addition, the third bush 227 may preferably be an oil-free bush.

Further, as shown in FIG. 7, in the embodiment, the second elastic member 224 is preferably a spring. In other embodiments, the second elastic member 224 may also be selected from an elastic piece, a leaf spring and the like, which is not limited in the embodiment.

### AGV embodiment

Based on the foregoing exemplary description of the AGV chassis mechanism, an exemplary embodiment of an AGV provided by the present disclosure will be described below.

In the embodiment, the AGV provided the present disclosure mainly includes a chassis mechanism and a loading mechanism, and the chassis mechanism is the AGV chassis mechanism described in the above embodiments and provided by the present disclosure. The loading mechanism is mounted on the AGV chassis mechanism, and may include, for example, a mounting plate for loading.

To sum up, the AGV chassis mechanism and the AGV with the mechanism provided by the present disclosure adopt a structure design of that the first end of the swing arm is hinged to the first hinge base, the second end of the swing arm extends toward the second hinge base, the lower end of the swing rod is hinged to the second hinge base, the second end of the swing arm is sleeved on the swing rod, the upper end of the swing rod is screwed with the first adjusting nut, and the first elastic member is arranged between the first adjusting nut and the swing arm, so that when the travelling mechanism of the AGV chassis mechanism adopts a dual differential design scheme in which two driving wheel assemblies are arranged at the left and right sides of the chassis and two universal wheel assemblies are arranged at the front and rear ends of the chassis, parameters such as a positive pressure of the driving wheel, a horizontal state of a vehicle body, and a ground adaptability can be adjusted without replacing the elastic members of the respective driving wheel assemblies, which simplifies adjustment operations and improves adjustment efficiency.

Further in an embodiment of the present disclosure, with the structure design of that the mounting rod is vertically inserted through the mounting base, the upper end of the mounting rod is screwed with the second adjusting nut, the middle part of the mounting rod is sleeved with the adjusting screw, the upper end of the adjusting screw is arranged adjacent to the second adjusting nut, the second elastic member is arranged between the lower end of the adjusting screw and the universal wheel, and the third adjusting nut fitting the adjusting screw is arranged at the top of the mounting base, so that when the travelling mechanism of the AGV chassis mechanism adopts the dual differential design scheme in which two driving wheel assemblies are arranged at the left and right sides of the chassis and two universal wheel assemblies are arranged at the front and rear ends of the chassis, parameters such as a positive pressure of the driving wheel and the universal wheel, a horizontal state of a vehicle body, and a ground adaptability can be adjusted without replacing the elastic members of the respective driving wheel assemblies and the respective universal wheel assemblies, which further simplifies adjustment operations and improves adjustment efficiency.

## Claims

1. An AGV chassis mechanism, comprising a chassis (300) and a travelling mechanism that comprises two driving wheel assemblies (100) respectively arranged at left and right sides of the chassis (300) and two universal wheel assemblies (200) respectively arranged at front and rear ends of the chassis (300), **characterized in that** the driving wheel assembly (100) comprises:
a first hinge base (110) and a second hinge base (120), fixed to the chassis (300) and spaced from each other;
a swing arm (130), having a first end hinged to the first hinge base (110) and a second end extending toward the second hinge base (120);
a swing rod (140), having an upper end and a lower end that is hinged to the second hinge base (120), wherein the second end of the swing arm (130) is sleeved on the swing rod (140), the upper end of the swing rod (140) is screwed with a first adjusting nut (141), and a first elastic member (142) is arranged between the first adjusting nut (141) and the swing arm (130); and
a driving wheel (150), installed on the swing arm (130),
wherein two said driving wheel assemblies (100) are symmetrically arranged on the left and right sides of the chassis (300),
**characterized in that**
the first end of the swing arm (130) is hinged to the first hinge base (110) through a first hinge shaft (131), and the first hinge shaft (131) thereon is provided with a first bush (132) for limiting position of the swing arm (130) in an extension direction of the first hinge shaft (131), and
the swing arm (130) is swingable around the first hinge shaft (131), and a swinging direction of the swing arm (130) is limited by sliding of the second end of the swing arm (130) on the swing rod (140) along an extension direction of the swing rod (140).

2. The AGV chassis mechanism according to claim 1, **characterized in that** the first bush (132) is an oil-free bush.

3. The AGV chassis mechanism according to claim 1 or 2, **characterized in that** a width of the second end of the swing arm (130) is greater than a width of a top of the second hinge base (120), so that position of downward swing of the swing arm (130) is limited by the second hinge base (120).

4. The AGV chassis mechanism according to claim 3, **characterized in that** a first gasket (133) is arranged at a bottom of the second end of the swing arm (130), preferably, material of the first gasket (133) is nylon.

5. The AGV chassis mechanism according to any one of claims 1 to 4, **characterized in that** a second gasket (134) is arranged between a top of the second end of the swing arm (130) and the first elastic member (142), preferably, material of the second gasket (134) is nylon.

6. The AGV chassis mechanism according to any one of claims 1 to 5, **characterized in that** the lower end of the swing rod (140) is hinged to the second hinge base (120) through a second hinge shaft (143), and the second hinge shaft (143) thereon is provided with a second bush (144), preferably an oil-free bush, for limiting position of the swing rod (140) in an extension direction of the second hinge shaft (143).

7. The AGV chassis mechanism according to any one of claims 1 to 6, **characterized in that** the upper end of the swing rod (140) is screwed with a first locking nut (145), and the first locking nut (145) is adjacently arranged at a side of the first adjusting nut (141) towards the upper end of the swing rod (140).

8. The AGV chassis mechanism according to any one of claims 1 to 7, **characterized in that** the first elastic member (142) is a spring.

9. The AGV chassis mechanism according to any one of claims 1 to 8, **characterized in that** the universal wheel assembly (200) comprises:
a mounting base (210), fixed to the chassis (300);
a mounting rod (220), vertically inserted through the mounting base (210) and having an upper end and a lower end; and
a universal wheel (230), installed at the lower end of the mounting rod (220),
wherein the upper end of the mounting rod (220) is screwed with a second adjusting nut (221), a middle part of the mounting rod (220) is sleeved with an adjusting screw (222) having an upper end adjacent to the second adjusting nut (221), a second elastic member (224), preferably a spring, is arranged between a lower end of the adjusting screw (222) and the universal wheel (230), and a third adjusting nut (223) fitting the adjusting screw (222) is arranged at a top of the mounting base (210).

10. The AGV chassis mechanism according to claim 9, **characterized in that** the chassis (300) is provided with a wheel hole, the mounting base (210) is fixed to the chassis (300) and closes the wheel hole, and the universal wheel (230) protrudes downward from the chassis (300) through the wheel hole.

11. The AGV chassis mechanism according to claim 9 or 10, **characterized in that** the mounting base (210) has a cylindrical structure with a top cover, and the third adjusting nut (223) is arranged on the top cover.

12. The AGV chassis mechanism according to any one of claims 9 to 11, **characterized in that** a third gasket (225) is arranged between the second adjusting nut (221) and the adjusting screw (222), preferably, material of the third gasket (225) is nylon.

13. The AGV chassis mechanism according to any one of claims 9 to 12, **characterized in that** the upper end of the mounting rod (220) is screwed with a second locking nut (226), and the second locking nut (226) is adjacently arranged at a side of the second adjusting nut (221) towards the upper end of the mounting rod (220).

14. The AGV chassis mechanism according to any one of claims 9 to 13, **characterized in that** a third bush (227), preferably an oil-free bush, is arranged between the mounting rod (220) and the adjusting screw (222) in a sleeving manner for limiting position of the adjusting screw (222) in an extension direction of the mounting rod (220).

15. An AGV, comprising a chassis mechanism and a loading mechanism installed on the chassis mechanism, **characterized in that** the chassis mechanism is the AGV chassis mechanism according to any one of claims 1 to 14.

## Patentansprüche

1. AGV-Chassismechanismus, aufweisend ein Chassis (300) und einen Fahrmechanismus, der zwei Antriebsradanordnungen (100) aufweist, die jeweils an der linken und an der rechten Seite des Chassis (300) angeordnet sind, und zwei Universalradanordnungen (200), die jeweils am vorderen und am hinteren Ende des Chassis (300) angeordnet sind,
**dadurch gekennzeichnet, dass** die Antriebsradanordnung (100) aufweist:
eine erste Gelenkbasis (110) und eine zweite Gelenkbasis (120), die am Chassis (300) befestigt und voneinander beabstandet sind;
einen Schwenkarm (130) mit einem ersten Ende, das an der ersten Gelenkbasis (110) gelenkig gehalten wird, und einem sich zur zweiten Gelenkbasis (120) hin erstreckenden zweiten Ende;
eine Schwenkstange (140) mit einem oberen Ende und einem unteren Ende, das an der zweiten Gelenkbasis (120) gelenkig gehalten wird, wobei das zweite Ende des Schwenkarms (130) hülsenartig auf der Schwenkstange (140) angeordnet ist, das obere Ende der Schwenkstange (140) mit einer ersten Einstellmutter (141) verschraubt ist und ein erstes elastisches Element (142) zwischen der ersten Einstellmutter (141) und dem Schwenkarm (130) angeordnet ist; und
ein am Schwenkarm (130) installiertes Antriebsrad (150),
wobei die beiden Antriebsradanordnungen (100) symmetrisch auf der linken und der rechten Seite des Chassis (300) angeordnet sind,
**dadurch gekennzeichnet, dass**
das erste Ende des Schwenkarms (130) über eine erste Gelenkwelle (131) an der ersten Gelenkbasis (110) gelenkig gehalten wird und die erste Gelenkwelle (131) mit einer ersten Buchse (132) versehen ist, um die Position des Schwenkarms (130) in einer Erstreckungsrichtung der ersten Gelenkwelle (131) zu begrenzen, und
der Schwenkarm (130) um die erste Gelenkwelle (131) schwenkbar ist und eine Schwenkrichtung des Schwenkarms (130) durch Gleiten des zweiten Endes des Schwenkarms (130) auf der Schwenkstange (140) entlang einer Erstreckungsrichtung der Schwenkstange (140) begrenzt ist.

2. AGV-Chassismechanismus nach Anspruch 1, **dadurch gekennzeichnet, dass** die erste Buchse (132) eine ölfreie Buchse ist.

3. AGV-Chassismechanismus nach Anspruch 1 oder 2, **dadurch gekennzeichnet, dass** eine Breite des zweiten Endes des Schwenkarms (130) größer ist als eine Breite einer Oberseite der zweiten Gelenkbasis (120), so dass die Position einer Abwärtsschwenkbewegung des Schwenkarms (130) durch die zweite Gelenkbasis (120) begrenzt ist.

4. AGV-Chassismechanismus nach Anspruch 3, **dadurch gekennzeichnet, dass** eine erste Dichtung (133) an einer Unterseite des zweiten Endes des Schwenkarms (130) angeordnet ist, wobei das Material der ersten Dichtung (133) vorzugsweise Nylon ist.

5. AGV-Chassismechanismus nach einem der Ansprüche 1 bis 4, **dadurch gekennzeichnet, dass** eine zweite Dichtung (134) zwischen einer Oberseite des zweiten Endes des Schwenkarms (130) und dem ersten elastischen Element (142) angeordnet ist, wobei das Material der zweiten Dichtung (134) vorzugsweise Nylon ist.

6. AGV-Chassismechanismus nach einem der Ansprüche 1 bis 5, **dadurch gekennzeichnet, dass** das untere Ende der Schwenkstange (140) über eine zweite Gelenkwelle (143) an der zweiten Gelenkbasis (120) gelenkig gehalten wird und die zweite Gelenkwelle (143) mit einer zweiten Buchse (144), vorzugsweise einer ölfreien Buchse, versehen ist, um die Position der Schwenkstange (140) in einer Erstreckungsrichtung der zweiten Gelenkwelle (143) zu begrenzen.

7. AGV-Chassismechanismus nach einem der Ansprüche 1 bis 6, **dadurch gekennzeichnet, dass** das obere Ende der Schwenkstange (140) mit einer ersten Sicherungsmutter (145) verschraubt ist und die erste Sicherungsmutter (145) benachbart zu und an einer Seite der ersten Einstellmutter (141) in Richtung zum oberen Ende der Schwenkstange (140) angeordnet ist.

8. AGV-Chassismechanismus nach einem der Ansprüche 1 bis 7, **dadurch gekennzeichnet, dass** das erste elastische Element (142) eine Feder ist.

9. AGV-Chassismechanismus nach einem der Ansprüche 1 bis 8, **dadurch gekennzeichnet, dass** die Universalradanordnung (200) aufweist:
eine am Chassis (300) befestigte Montagebasis (210);
eine Montagestange (220), die vertikal durch die Montagebasis (210) eingeführt ist und ein oberes Ende und ein unteres Ende aufweist; und
ein am unteren Ende der Montagestange (220) installiertes Universalrad (230),
wobei das obere Ende der Montagestange (220) mit einer zweiten Einstellmutter (221) verschraubt ist, ein mittlerer Teil der Montagestange (220) von einer Einstellschraube (222) hülsenartig umgeben ist, deren oberes Ende der zweiten Einstellmutter (221) benachbart ist, ein zweites elastisches Element (224), vorzugsweise eine Feder, zwischen einem unteren Ende der Einstellschraube (222) und dem Universalrad (230) angeordnet ist, und eine dritte Einstellmutter (223), die auf die Einstellschraube (222) passt, an einer Oberseite der Montagebasis (210) angeordnet ist.

10. AGV-Chassismechanismus nach Anspruch 9, **dadurch gekennzeichnet, dass** das Chassis (300) mit einem Radloch versehen ist, die Montagebasis (210) am Chassis (300) befestigt ist und das Radloch verschließt, und das Universalrad (230) durch das Radloch vom Chassis (300) nach unten hervorsteht.

11. AGV-Chassismechanismus nach Anspruch 9 oder 10, **dadurch gekennzeichnet, dass** die Montagebasis (210) eine zylindrische Struktur mit einer oberen Abdeckung aufweist und die dritte Einstellmutter (223) auf der oberen Abdeckung angeordnet ist.

12. AGV-Chassismechanismus nach einem der Ansprüche 9 bis 11, **dadurch gekennzeichnet, dass** eine dritte Dichtung (225) zwischen der zweiten Einstellmutter (221) und der Einstellschraube (222) angeordnet ist, wobei das Material der dritten Dichtung (225) vorzugsweise Nylon ist.

13. AGV-Chassismechanismus nach einem der Ansprüche 9 bis 12, **dadurch gekennzeichnet, dass** das obere Ende der Montagestange (220) mit einer zweiten Sicherungsmutter (226) verschraubt ist und die zweite Sicherungsmutter (226) benachbart zu und an einer Seite der zweiten Einstellmutter (221) in Richtung zum oberen Ende der Montagestange (220) angeordnet ist.

14. AGV-Chassismechanismus nach einem der Ansprüche 9 bis 13, **dadurch gekennzeichnet, dass** eine dritte Buchse (227), vorzugsweise eine ölfreie Buchse, zwischen der Montagestange (220) und der Einstellschraube (222) auf eine hülsenartige Weise angeordnet ist, um die Position der Einstellschraube (222) in einer Erstreckungsrichtung der Montagestange (220) zu begrenzen.

15. AGV, aufweisend einen Chassismechanismus und einen auf dem Chassismechanismus installierten Lademechanismus, **dadurch gekennzeichnet, dass** der Chassismechanismus der AGV-Chassismechanismus nach einem der Ansprüche 1 bis 14 ist.

## Revendications

1. Mécanisme de châssis de véhicule VGA, comprenant un châssis (300) et un mécanisme de déplacement qui comprend deux ensembles de roue d'entraînement (100) disposés respectivement au niveau de côtés gauche et droit du châssis (300) et deux ensembles de roue universelle (200) disposés respectivement au niveau d'extrémités avant et arrière du châssis (300), **caractérisé en ce que** l'ensemble de roue d'entraînement (100) comprend :
une première base d'articulation (110) et une seconde base d'articulation (120), fixées au châssis (300) et espacées l'une de l'autre ;
un bras pivotant (130), dont une première extrémité est articulée par rapport à la première base d'articulation (110) et dont une seconde extrémité s'étend vers la seconde base d'articulation (120) ;
une tige oscillante (140), comportant une extrémité supérieure et une extrémité inférieure qui est articulée par rapport à la seconde base d'articulation (120), dans lequel la seconde extrémité du bras pivotant (130) est manchonnée sur la tige oscillante (140), l'extrémité supérieure de la tige oscillante (140) est vissée avec un premier écrou de réglage (141), et un premier élément élastique (142) est disposé entre le premier écrou de réglage (141) et le bras pivotant (130) ; et
une roue d'entraînement (150), installée sur le bras pivotant (130),
dans lequel lesdits deux ensembles de roue d'entraînement (100) sont agencés symétriquement sur les côtés gauche et droit du châssis (300),
**caractérisé en ce que**
la première extrémité du bras pivotant (130) est articulée par rapport à la première base d'articulation (110) par l'intermédiaire d'un premier arbre de charnière (131), et le premier arbre de charnière (131) est pourvu, sur ce dernier, d'une première bague (132) prévue pour limiter une position du bras pivotant (130) dans une direction d'extension du premier arbre d'articulation (131), et
le bras pivotant (130) peut osciller autour du premier arbre d'articulation (131), avec une amplitude d'oscillation du bras pivotant (130) limitée par un coulissement de la seconde extrémité du bras pivotant (130) sur la tige oscillante (140) suivant la direction d'extension de la tige oscillante (140).

2. Mécanisme de châssis de VGA selon la revendication 1, **caractérisé en ce que** la première bague (132) est une bague exempte d'huile.

3. Mécanisme de châssis de VGA selon la revendication 1 ou la revendication 2, **caractérisé en ce qu'**une largeur de la seconde extrémité du bras pivotant (130) est supérieure à une largeur d'une partie haute de la seconde base d'articulation (120), de sorte qu'une position d'oscillation vers le bas du bras pivotant (130) est limitée par la seconde base d'articulation (120).

4. Mécanisme de châssis de VGA selon la revendication 3, **caractérisé en ce qu'**un premier joint (133) est disposé au niveau d'une partie inférieure de la seconde extrémité du bras pivotant (130), un matériau du premier joint (133) étant de préférence du nylon.

5. Mécanisme de châssis de VGA selon l'une quelconque des revendications 1 à 4, **caractérisé en ce qu'**un deuxième joint (134) est disposé entre un dessus de la seconde extrémité du bras pivotant (130) et le premier élément élastique (142), un matériau du deuxième joint (134) étant de préférence du nylon.

6. Mécanisme de châssis de VGA selon l'une quelconque des revendications 1 à 5, **caractérisé en ce que** l'extrémité inférieure de la tige oscillante (140) est articulée par rapport à la seconde base d'articulation (120) par l'intermédiaire d'un second arbre d'articulation (143), et le second arbre d'articulation (143) est pourvu, sur ce dernier, d'une deuxième bague (144), de préférence une bague exempte d'huile, prévue pour limiter une position de la tige oscillante (140) dans une direction d'extension du second arbre d'articulation (143).

7. Mécanisme de châssis de VGA selon l'une quelconque des revendications 1 à 6, **caractérisé en ce que** l'extrémité supérieure de la tige oscillante (140) est vissée avec un premier écrou de blocage (145), et le premier écrou de blocage (145) est disposé adjacent à un côté du premier écrou de réglage (141) vers l'extrémité supérieure de la tige oscillante (140).

8. Mécanisme de châssis de VGA selon l'une quelconque des revendications 1 à 7, **caractérisé en ce que** le premier élément élastique (142) est un ressort.

9. Mécanisme de châssis de VGA selon l'une quelconque des revendications 1 à 8, **caractérisé en ce que** l'ensemble de roue universelle (200) comprend :
une base de montage (210), fixée au châssis (300) ;
une tige de montage (220), introduite verticalement à travers la base de montage (210) et comportant une extrémité supérieure et une extrémité inférieure ; et
une roue universelle (230), installée au niveau de l'extrémité inférieure de la tige de montage (220),
dans lequel l'extrémité supérieure de la tige de montage (220) est vissée avec un deuxième écrou de réglage (221), une partie intermédiaire de la tige de montage (220) est manchonnée avec une vis de réglage (222) dont une extrémité supérieure est adjacente au deuxième écrou de réglage (221), un second élément élastique (224), de préférence un ressort, est disposé entre une extrémité inférieure de la vis de réglage (222) et la roue universelle (230), et un troisième écrou de réglage (223) s'ajustant sur la vis de réglage (222) est disposé sur le dessus de la base de montage (210).

10. Mécanisme de châssis de VGA selon la revendication 9, **caractérisé en ce que** le châssis (300) est pourvu d'un trou de roue, la base de montage (210) est fixée au châssis (300) et ferme le trou de roue, et la roue universelle (230) fait saillie vers le bas depuis le châssis (300) à travers le trou de roue.

11. Mécanisme de châssis de VGA selon la revendication 9 ou la revendication 10, **caractérisé en ce que** la base de montage (210) a une structure cylindrique dotée d'un élément de recouvrement supérieur, et le troisième écrou de réglage (223) est disposé sur l'élément de recouvrement supérieur.

12. Mécanisme de châssis de VGA selon l'une quelconque des revendications 9 à 11, **caractérisé en ce qu'**un troisième joint (225) est disposé entre le deuxième écrou de réglage (221) et la vis de réglage (222), un matériau du troisième joint (225) étant de préférence du nylon.

13. Mécanisme de châssis de VGA selon l'une quelconque des revendications 9 à 12, **caractérisé en ce que** l'extrémité supérieure de la tige de montage (220) est vissée avec un second écrou de blocage (226), et le second écrou de blocage (226) est disposé adjacent à un côté du deuxième écrou de réglage (221) vers l'extrémité supérieure de la tige de montage (220).

14. Mécanisme de châssis de VGA selon l'une quelconque des revendications 9 à 13, **caractérisé en ce qu'**une troisième bague (227), de préférence une bague exempte d'huile, est disposée entre la tige de montage (220) et la vis de réglage (222) d'une manière manchonnée de façon à limiter une position de la vis de réglage (222) dans une direction d'extension de la tige de montage (220).

15. Véhicule VGA comprenant un mécanisme de châssis et un mécanisme de chargement installé sur le mécanisme de châssis, **caractérisé en ce que** le mécanisme de châssis est le mécanisme de châssis de véhicule VGA selon l'une quelconque des revendications 1 à 14.
